# EUROPÄISCHE PATENTSCHRIFT

(11) **EP 3 489 774 B1**
(45) Veröffentlichungstag und Bekanntmachung des Hinweises auf die Patenterteilung: **17.04.2024**
(21) Anmeldenummer: 17203055.3
(22) Anmeldetag: 22.11.2017
(51) Int. Cl.: G05B 19/042, G05B 23/02

(54) **AUTOMATISIERTE ERMITTLUNG EINER PARAMETRIERUNG EINES AUSWERTEVERFAHRENS**
AUTOMATED DETERMINATION OF A PARAMETRISATION OF AN EVALUATION METHOD
DÉTERMINATION AUTOMATISÉE DU PARAMÉTRAGE D'UN PROCÉDÉ D'ÉVALUATION

(43) Veröffentlichungstag der Anmeldung: 29.05.2019
(73) Patentinhaber: Siemens Aktiengesellschaft, 80333 München (DE)
(72) Erfinder: Bierweiler, Thomas, 76131 Karlsruhe (DE); John, Jean Pascal, 76137 Karlsruhe (DE); Labisch, Daniel, 76149 Karlsruhe (DE); Pfeiffer, Bernd-Markus, 76744 Wörth (DE)
(74) Vertreter: Siemens Patent Attorneys

(56) Entgegenhaltungen:
- WO-A1-2010/133234
- US-A1- 2015 095 718

## Beschreibung

Die Erfindung betrifft ein Verfahren zur Durchführung eines Auswerteverfahrens durch eine automatisierte Ermittlung eines Schwellwertparameters des Auswerteverfahrens mittels eines Computers nach Anspruch 1. Außerdem betrifft die Erfindung ein dazugehöriges Computerprogramm mit durch einen Computer ausführbaren Programmcodeanweisungen nach Anspruch 3, ein Speichermedium nach Anspruch 4 und ein Computersystem nach Anspruch 5.

Im Bereich fertigungstechnischer- und prozesstechnischer Anlagen werden regelmäßig Auswertemethoden eingesetzt, um verschiedene Daten der Anlagen auszuwerten und beispielsweise eine Optimierung der Anlage durchzuführen. Für die Anwendung dieser Auswertemethoden wird in der Regel eine Parametrierung benötigt, die eine Mehrzahl an einzelnen Parametern umfassen kann.

Die Parameter der Auswertemethoden müssen beispielsweise von Anwendern oder Inbetriebnehmern der technischen Anlage vorgegeben werden. Die Festlegung der Parameter kann sich dabei als komplex erweisen, da beispielsweise die Zusammenhänge zwischen den einzelnen Parametern und dem Ergebnis der Auswertung nicht bekannt, unzureichend dokumentiert oder nur schwer verständlich sind. Mit steigender Komplexität bzw. Aufwand der Parametrierung kann die Akzeptanz oder Nutzbarkeit bestimmter Auswertemethoden derart gering ausfallen, dass die Auswertemethoden nicht angewandt werden, obwohl sie eine Effizienzsteigerung der technischen Anlage mit sich bringen würden.

Zudem basiert die Festlegung der Parametrierung oft auf den Erfahrungen der Anwender oder Inbetriebnehmer, wodurch sich unter Umständen eine hohe Abhängigkeit von der Verfügbarkeit einzelner Personen ergeben kann.

Es ist bekannt, verschiedene mögliche Parametrierungen nach der Versuch und Irrtum Methode durchzuprobieren und die jeweiligen Ergebnisse miteinander zu vergleichen. Dieser Vorgang kann zumindest teilweise automatisiert werden, wenn die parameterabhängige Güte der Ergebnisse entsprechend objektiviert werden kann. Diese Methode ist jedoch, speziell bei aufwändigen bzw. umfangreichen Parametrierungen, vergleichsweise zeitaufwändig. Zudem kann keine verlässliche Aussage darüber getroffen werden, ob tatsächlich sinnvolle Parameter für die jeweilige Auswertemethode gefunden werden konnten.

Darüber hinaus sind bei gut bekannten Auswerteverfahren teilweise auch Speziallösungen bekannt, wie die Parametrierung dieser Auswerteverfahren erfolgen kann. In der Regelungstechnik kann die Parametrierung eines PID-Reglers beispielsweise anhand der Auswertung des Prozessausgangs auf einen Sprung des Sollwertes erfolgen. Hier erfolgt, mit anderen Worten ausgedrückt, eine Parametrierung eines Auswertealgorithmus anhand einer Antwort auf Änderungen des auszuwertenden Systems.

Die DE 10 2008 058 964 A1 offenbart eine Parametrierung eines Regelungsverfahrens, bei der Reglerparameter in Abhängigkeit von einer Regelabweichung und/oder einer Sollwertänderung und/oder mittels manueller Vorgabe bestimmt werden.

In der EP 3 065 015 A1 ist eine Diagnoseeinrichtung zur Überwachung eines Regelkreises gezeigt, bei der durch einen Bediener Änderungen der Parametrierung der Regelung vorgenommen werden können.

Die WO 2010/133234 A1 offenbart ein Verfahren zum Analysieren einer Menge oder Folge von bei der Steuerung und/oder Überwachung eines technischen Prozesses generierten Meldungen.

Der Erfindung liegt die Aufgabe zugrunde, ein Verfahren zur Parametrierung eines Auswerteverfahrens, das zur Identifizierung bestimmter Teildaten einer Datenmenge einer industriellen Anlage, insbesondere Fertigungs- oder Prozessanlage, geeignet und vorgesehen ist, anzugeben, das bei einem vergleichsweise geringen Aufwand vollständig automatisiert erfolgen kann.

Diese Aufgabe wird gelöst durch ein Verfahren nach Anspruch 1 zur Durchführung eines Auswerteverfahrens durch eine automatisierte Ermittlung eines Schwellwertparameters des Auswerteverfahrens mittels eines Computers. Außerdem wird diese Aufgabe gelöst durch ein Computerprogramm mit durch einen Computer ausführbaren Programmcodeanweisungen nach Anspruch 3, ein Speichermedium mit einem durch einen Computer ausführbaren Computerprogramm nach Anspruch 4 und ein Computersystem nach Anspruch 5. Vorteilhafte Weiterbildungen ergeben sich aus den abhängigen Ansprüchen.

Die Aufgabe wird erfindungsgemäß gelöst durch ein Verfahren zur Durchführung eines Auswerteverfahrens durch eine automatisierte Ermittlung eines Schwellwertparameters des Auswerteverfahrens mittels eines Computers, wobei das Auswerteverfahren zur Auswertung eines Meldungsarchivs mit einer Menge an Meldungen, die bei einer Steuerung und/oder Überwachung einer industriellen Anlage, insbesondere Fertigungs- oder Prozessanlage, generiert werden, durchgeführt wird, wobei die Meldungen wenigstens zwei sich voneinander unterscheidende Meldungsidentifikationen aufweisen, und wobei sich wenigstens zwei Meldungsidentifikationen der Meldungen voneinander unterscheiden, wobei eine Meldungsidentifikation eine Zuweisung zu einer bestimmten Maschine, einem Sensor oder einem Aktor, darstellt.

Das Verfahren umfasst die folgenden Schritte:
a) Erzeugen eines Vergleichsarchivs und Hinterlegen von Referenzmeldungen in dem Vergleichsarchiv, wobei eine Menge der in dem Vergleichsarchiv hinterlegten Referenzmeldungen im Wesentlichen der Menge an Meldungen entspricht, die in dem Meldungsarchiv hinterlegt sind,
   und wobei die Referenzmeldungen jeweils eine Meldungsidentifikation aufweisen, und wobei sich wenigstens zwei Meldungsidentifikationen der Referenzmeldungen voneinander unterscheiden,
   und wobei das Vergleichsarchiv mit dem Meldungsarchiv der industriellen Anlage vergleichbare statistische Eigenschaften aufweist, insbesondere eine betragsmäßig gleiche zeitliche Ausdehnung und/oder einen gleichen Wertebereich der Meldungsidentifikationen und/oder eine gleiche Anzahl an verschiedenen Meldungsidentifikationen und/oder gleiche Meldungsidentifikationen und/oder eine gleiche Varianz von Meldungsidentifikationen;
b) Bestimmen einer absoluten Auftretenshäufigkeit von einzelnen Meldungsidentifikationen innerhalb der Menge von in dem Vergleichsarchiv hinterlegten Referenzmeldungen;
c) Bestimmen einer Übergangswahrscheinlichkeit von Referenzmeldungen mit einer ersten Meldungsidentifikation zu Referenzmeldungen mit einer zweiten Meldungsidentifikation bei allen in dem Vergleichsarchiv hinterlegten Referenzmeldungen mittels der jeweiligen absoluten Auftretenshäufigkeit;
d) Ermitteln eines ersten Schwellwertparameters für eine minimale Übergangswahrscheinlichkeit zwischen einer Referenzmeldung mit einer ersten Meldungsidentifikation zu einer Referenzmeldung mit einer zweiten Meldungsidentifikation, derart, dass eine relative Anzahl an Paaren von Referenzmeldungen, deren Übergangswahrscheinlichkeit nach dem Ermitteln des ersten Schwellwertparameters oberhalb des ermittelten ersten Schwellwertparameters liegt, in Bezug auf alle in dem Vergleichsarchiv hinterlegten Paare von Referenzmeldungen mit sich voneinander unterscheidendenden Meldungsidentifikationen betragsmäßig kleiner als ein vorherbestimmter Schwellwert ist, vorzugsweise kleiner als 10 Prozent, bevorzugt kleiner als 5 Prozent, besonders bevorzugt kleiner als 1 Prozent;
e) Bereitstellen des ermittelten Schwellwertparameters und Durchführung des Auswerteverfahrens zur Auswertung des Meldungsarchivs.

Im Rahmen des Verfahrens werden statistische Abhängigkeiten zwischen einzelnen Meldungsidentifikationen der in dem Meldungsarchiv befindlichen Menge an Meldungen bestimmt, um beispielsweise eine Anpassung einer Alarmparametrierung der prozesstechnischen oder fertigungstechnischen Anlage vereinfacht und zielgerichtet durchführen zu können. Das Verfahren basiert dabei auf der Annahme, dass verschiedene Meldungsidentifikationen mit einer signifikanten Übergangswahrscheinlichkeit auch eine gewisse Abhängigkeit voneinander aufweisen. Signifikant bedeutet in diesem Zusammenhang, dass die Übergangswahrscheinlichkeit betragsmäßig oberhalb des vorherbestimmten ersten Schwellwertes liegt.

Der Schwellwertparameter für die Übergangswahrscheinlichkeit wird dabei im Rahmen des Verfahrens so gewählt, dass nach Anwenden des Auswerteverfahrens auf das Vergleichsarchiv eine Menge an Treffern (als hinreichend wahrscheinlich bzw. oft auftretend identifizierte Abfolgen von Meldungsidentifikationen) kleiner ist als der vorherbestimmte erste (Gesamt-) Schwellwert des Verfahrens. Es ist hierbei zu beachten, dass es sich bei dem Schwellwertparameter und dem vorherbestimmten ersten (Gesamt-) Schwellwert des Verfahrens um zwei voneinander verschiedene Parameter handelt. Der Schwellwertparameter stellt das Ergebnis des Verfahrens dar, während der erste (Gesamt-) Schwellwert einen Parameter des Ermittlungsverfahrens selbst darstellt. Bezüglich einer detaillierten Erläuterung dieses Unterschieds sei zusätzlich auf die Beschreibung des Ausführungsbeispiels verwiesen.

Bei einer besonders bevorzugten Weiterbildung des zuvor erläuterten erfindungsgemäßen Verfahrens werden zwischen den Verfahrensschritten d und e die folgenden Schritte durchgeführt:
i) Identifizieren einer ersten Meldung, die eine erste Meldungsidentifikation aufweist, und einer zweiten, zeitlich nachfolgenden Meldung, die eine zweite Meldungsidentifikation aufweist, wobei die dazugehörige Übergangswahrscheinlichkeit von der ersten Meldungsidentifikation zu der zweiten Meldungsidentifikation betragsmäßig größer als der erste Schwellwertparameter für die minimale Übergangswahrscheinlichkeit zwischen zwei Meldungsidentifikationen sein muss, und wobei die zweite Meldungsidentifikation innerhalb einer festzulegenden Zeitspanne, ausgehend von der ersten Meldungsidentifikation, in dem Vergleichsarchiv auffindbar sein muss.
ii) Zusammenfassen der beiden identifizierten Meldungen als eine 2er-Kette.
iii) Wiederholen der Schritte i und ii bei jeder in dem Vergleichsarchiv hinterlegten Meldung.
iv) Ausgehend von einer zweiten Meldung einer 2er-Kette, die eine zweite Meldung mit einer zweiten Meldungsidentifikation aufweist, Durchsuchen der Menge an Meldungen innerhalb der festgelegten Zeitspanne nach weiteren, zeitlich nachfolgenden Meldungen, bis ein Ende der Zeitspanne erreicht ist.
v) Berücksichtigen der jeweiligen weiteren Meldung, wenn die Übergangswahrscheinlichkeit der zeitlich davor liegenden Meldungsidentifikation hin zu der weiteren Meldungsidentifikation betragsmäßig größer als der Schwellwertparameter für die minimale Übergangswahrscheinlichkeit zwischen zwei Meldungsidentifikationen ist.
vi) Zusammenfassen der gefundenen weiteren Meldungen zusammen mit der ersten und zweiten Meldung als eine weitere Kette, insbesondere 3er-Kette, 4er-Kette oder 5er-Kette.
vii) Wiederholen der Schritte v und vi bei jeder zuvor identifizierten 2er-Kette.
viii) Ermitteln einer absoluten Auftretenshäufigkeit einzelner Ketten.
ix) Ermitteln eines Schwellwertparameters für eine minimale relative Auftretenshäufigkeit einer Kette, derart, dass eine relative Auftretenshäufigkeit von Ketten, die betragsmäßig oberhalb des Schwellwertparameters liegen, in Bezug auf alle in dem Vergleichsarchiv identifizierten Ketten von Meldungsidentifikationen betragsmäßig kleiner als ein zweiter vorherbestimmter Schwellwert ist, bevorzugt kleiner als 10 Prozent, vorzugsweise kleiner als 5 Prozent, höchst vorzugsweise kleiner als 1 Prozent.

Im Zusammenhang mit dem Begriff "Zeitspanne" wird im Rahmen der zuvor erläuterten Weiterbildung des Verfahrens von einer ersten Meldung mit einer ersten Meldungsidentifikation als Basis ausgegangen. Anschließend wird in dem Vergleichsarchiv nach einer zweiten Meldung mit einer zweiten Meldungsidentifikation (von der ersten Meldungsidentifikation verschieden) gesucht. Die zweite Meldungsidentifikation darf dabei aber zeitlich nicht später aufgetreten sein als es durch die bestimmte Zeitspanne vorgegeben wird.

Ist die erste Meldung mit der ersten Meldungsidentifikation beispielweise bei der absoluten Zeit t = 25 min aufgetreten und die Zeitspanne auf 5 min festgelegt worden, so muss die zweite Meldung mit der zweiten Meldungsidentifikation zwischen der absoluten Zeit t = 25 min und t = 30 min aufgetreten sein, um berücksichtigt zu werden. In dem beschriebenen Rahmen wird demnach eine absolute Zeitspanne verwendet, d.h. wenn die Zeitspanne ausgehend von der bestimmten zweiten Meldungsidentifikation verstrichen ist, ist die Suche nach weiteren Meldungsidentifikationen, die Teil einer zu identifizierenden Kette sein könnten, beendet.

Ausgehend von der zweiten Meldung mit der zweiten Meldungsidentifikation wird das Vergleichsarchiv nach weiteren, zeitlich nachfolgenden Meldungen durchsucht, bis ein Ende der Zeitspanne erreicht ist. Dabei werden die weitere Meldung oder die weiteren Meldungen entsprechend nur berücksichtigt, wenn die Übergangswahrscheinlichkeit der zeitlich davorliegenden Meldungsidentifikation zu der weiteren Meldungsidentifikation oberhalb des ersten Schwellwertparameters liegt.

Die gefundenen weiteren Meldungen werden zusammen mit der ersten und zweiten Meldung als eine weitere Kette identifiziert, insbesondere 3er-Kette, 4er-Kette oder 5er-Kette. Die zuvor erläuterten Verfahrensschritte werden anschließend bei jeder in dem Vergleichsarchiv identifizierten 2er-Kette angewandt. Als Ergebnis erhält man dadurch alle möglichen 2er-, 3er-, 4er-Ketten usw. innerhalb des Vergleichsarchivs. Dadurch lassen sich auch komplexere Zusammenhänge zwischen einzelnen Meldungsidentifikationen erfassen und auswerten.

Im weiteren Verlauf des Verfahrens werden weniger relevante Ketten und/oder Gruppen von Meldungen von bedeutenderen unterschieden. Hierzu werden nur Ketten berücksichtigt, die oberhalb eines zweiten Schwellwertparameters liegen. Der zweite Schwellwertparameter wird dabei vorteilhafterweise so bestimmt, dass eine relative Anzahl an Ketten von Meldungsidentifikationen, die als Treffer identifiziert werden, betragsmäßig kleiner als ein vorherbestimmter (Teil-) Schwellwert ist. Dieser Teilschwellwert muss nicht zwingend mit dem (Teil-)Schwellwert übereinstimmen, der zur Ermittlung des ersten Schwellwertparameters verwendet wurde.

Die ermittelte Parametrierung umfasst im Falle der zuvor erläuterten Weiterbildung des Verfahrens einen ersten Schwellwertparameter für eine minimale Übergangswahrscheinlichkeit zwischen zwei Meldungsidentifikationen und einen zweiten Schwellwertparameter für eine minimale relative Auftretenshäufigkeit einer Kette von Meldungsidentifikationen. Es liegt im Rahmen der Erfindung, weitere Parameter zu bestimmen, die ein Ergebnis des Auswerteverfahrens beeinflussen können.

Das beschriebene Verfahren mit seinen Ausgestaltungen ist bevorzugt in einer Software implementiert. Die zuvor ausgeführte Aufgabe wird entsprechend auch durch ein Computerprogramm mit durch einen Computer ausführbaren Programmcodeanweisungen zur Implementierung des erfindungsgemäßen Verfahrens gelöst. Bei dem Computer kann es sich beispielsweise um ein Automatisierungsgerät mit einer Verarbeitungseinheit nach Art eines Prozessors oder dergleichen handeln.

Ein Automatisierungsgerät, insbesondere ein Industrieautomatisierungsgerät, auf dem ein derartiges Computerprogramm implementiert ist, ist ein Beispiel für ein Computersystem, auf welches sich die Erfindung ebenfalls bezieht. Anstelle des Automatisierungsgerätes kommen auch Standardcomputer, wie sie bei der Büroautomatisierung üblich sind, in Betracht.

Das Computerprogramm zur Implementierung des Verfahrens wird üblicherweise auf oder in einem Speichermedium, also beispielsweise auf einem magnetischen oder optischen Datenträger oder in einem Halbleiterspeicher, vorgehalten, so dass die Erfindung auch ein Speichermedium mit einem durch einen Computer ausführbaren Computerprogramm zur Implementierung des erfindungsgemäßen Verfahrens und seiner Ausgestaltungen betrifft.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels.

Ein erfindungsgemäßes Verfahren wird beispielhaft zur Durchführung eines Auswerteverfahrens durch eine automatisierte Ermittlung eines Schwellwertparameters des Auswerteverfahrens zur Erkennung von statistischen Abhängigkeiten zwischen Prozessmeldungen einer industriellen Anlage verwendet.

Bei der Steuerung oder Überwachung eines technischen Prozesses einer industriellen Prozess- oder Fertigungsanlage wird regelmäßig eine Vielzahl an Meldungen erzeugt. Bei solchen Meldungen kann es sich, wie zuvor bereits erläutert, um Hinweise auf Fehler oder Ausnahmesituationen, z.B. Hinweise auf erreichte oder überschrittene Grenzwerte und dergleichen, handeln. Die Art und der Ursprung solcher Meldungen sind über die exemplarisch erwähnten Beispiele hinaus äußerst vielfältig und jede in der Anlage erzeugte oder verarbeitete Meldung soll im Folgenden als von der Bezeichnung "Meldung" umfasst gelten.

Zunächst wird mittels eines Computers ein Vergleichsarchiv erzeugt, das mit dem Meldungsarchiv der industriellen Anlage vergleichbare statistische Eigenschaften aufweist. Dabei weist es eine betragsmäßig gleiche zeitliche Ausdehnung, einen gleichen Wertebereich der darin enthaltenen Meldungsidentifikationen, eine gleiche Anzahl an verschiedenen Meldungsidentifikationen, gleiche Meldungsidentifikationen und eine gleiche Varianz von Meldungsidentifikationen auf.

Anschließend werden Zufallsmeldungen erzeugt und in dem Vergleichsarchiv hinterlegt. Dabei entspricht eine Menge der in dem Vergleichsarchiv hinterlegten Zufallsmeldungen der Menge an Meldungen, die in dem Meldungsarchiv hinterlegt sind.

Das Vergleichsarchiv enthält Zufallsalarmmeldungen mit den Meldungsidentifikationen "A", "B", "C", "D", "E", "F", "G", "H" und "I". Die Alarmmeldungen sind in der folgenden zeitlichen Abfolge in dem Vergleichsarchiv hinterlegt ("Meldungsident." stellt im Folgenden eine Abkürzung für "Meldungsidentifikation" dar):

| Zeit in min | Meldungsident. | Zeit in min | Meldungsident. | Zeit in min | Meldungsident. |
|---|---|---|---|---|---|
| 1 | B | 16 | F | 20 | C |
| 3 | C | 16 | D | 20 | H |
| 5 | D | 17 | G | 21 | D |
| 10 | B | 17 | A | 22 | I |
| 11 | E | 18 | F | 23 | H |
| 12 | A | 18 | E | 26 | A |
| 13 | B | 18 | B | 27 | D |
| 15 | C | 19 | G | 28 | D |

In einem nächsten Schritt werden die in dem betrachteten Zeitbereich des Vergleichsarchivs enthaltenen Meldungsidentifikationen identifiziert und deren absolute Auftretenshäufigkeit bestimmt. Die folgende Übersicht zeigt die ermittelten absoluten Auftretenshäufigkeiten (Histogramm) der einzelnen Meldungsidentifikationen:

| Meldungsident. | Häufigkeit |
|---|---|
| A | 3 |
| B | 4 |
| C | 3 |
| D | 5 |
| E | 2 |
| F | 2 |
| G | 2 |
| H | 2 |
| I | 1 |

Für die weitere Auswertung werden nur Meldungsidentifikationen berücksichtigt, die oberhalb eines bestimmten Schwellwertes liegen. Dieser wird exemplarisch auf den Wert 3 festgelegt. Für die weitere Auswertung werden demnach im vorliegenden Ausführungsbeispiel nur die Meldungsidentifikationen "A", "B", "C" und "D" berücksichtigt. Dadurch lassen sich die unbedeutenderen Meldungsidentifikationen "E", "F", "G", "H" und "I" von der weiteren Auswertung ausschließen, wodurch die betrachtete Teilmenge der Gesamtmenge an Meldungsidentifikationen verringert werden kann, was die Übersichtlichkeit der erzielten Ergebnisse erhöht und eine Weiterverarbeitung selbiger erleichtert.

Anschließend werden eine Frequenzmatrix und eine Übergangswahrscheinlichkeitsmatrix allokiert und mit den Werten "0" versehen. Beide Matrizen haben die Größe (Anzahl berücksichtigte Meldungsidentifikationen x Anzahl berücksichtigte Meldungsidentifikationen), was im vorliegenden Ausführungsbeispiel einer Größe 4x4 entspricht. Im Folgenden ist auf der linken Seite die Frequenzmatrix dargestellt, auf der rechten Seite die Übergangswahrscheinlichkeitsmatrix:

| | A | B | C | D | | A | B | C | D |
|---|---|---|---|---|---|---|---|---|---|
| A | 0 | 0 | 0 | 0 | A | 0 | 0 | 0 | 0 |
| B | 0 | 0 | 0 | 0 | B | 0 | 0 | 0 | 0 |
| C | 0 | 0 | 0 | 0 | C | 0 | 0 | 0 | 0 |
| D | 0 | 0 | 0 | 0 | D | 0 | 0 | 0 | 0 |

Beginnend mit der zeitlich zuerst auftretenden Meldungsidentifikation "B" werden alle Meldungsidentifikationen identifiziert, die zeitlich nach der ersten Meldungsidentifikation "B" auftreten. Die Suche ist beendet, wenn die Meldungsidentifikation "B" erneut auftritt. Vorliegend liegt eine Meldung mit der Meldungsidentifikation "C" und eine Meldung mit der Meldungsidentifikation "D" zwischen den beiden Meldungsidentifikationen "B". Dabei ist es ohne Bedeutung, wie oft die jeweiligen Meldungsidentifikationen gegebenenfalls zwischen den beiden Meldungsidentifikationen "B" auftreten. Die entsprechenden Matrixelemente der Frequenzmatrix werden um 1 erhöht, so dass sich folgende Matrizen ergeben:

| | A | B | C | D | | A | B | C | D |
|---|---|---|---|---|---|---|---|---|---|
| A | 0 | 0 | 0 | 0 | A | 0 | 0 | 0 | 0 |
| B | 0 | 0 | 0 | 0 | B | 0 | 0 | 0 | 0 |
| C | 0 | 1 | 0 | 0 | C | 0 | 0 | 0 | 0 |
| D | 0 | 1 | 0 | 0 | D | 0 | 0 | 0 | 0 |

Der zuletzt beschriebene Schritt wird für alle in dem Vergleichsarchiv vorkommenden Meldungsidentifikationen "B" wiederholt, so dass sich die folgenden Matrizen ergeben:

| | A | B | C | D | | A | B | C | D |
|---|---|---|---|---|---|---|---|---|---|
| A | 0 | 2 | 0 | 0 | A | 0 | 0 | 0 | 0 |
| B | 0 | 0 | 0 | 0 | B | 0 | 0 | 0 | 0 |
| C | 0 | 2 | 0 | 0 | C | 0 | 0 | 0 | 0 |
| D | 0 | 2 | 0 | 0 | D | 0 | 0 | 0 | 0 |

Im folgenden Schritt wird die Übergangswahrscheinlichkeitsmatrix angepasst. Die Spalte mit der Bezeichnung "B" der Frequenzmatrix wird selektiert und elementweise (zeilenweise) durch das Maximum der absoluten Auftretenshäufigkeit der Meldungsidentifikation "B" und der Häufigkeit der jeweiligen Meldungsidentifikation in der jeweiligen Zeile der Frequenzmatrix geteilt.

Das Maximum wird verwendet, um bei einer nur sporadisch bzw. zufällig oder sehr häufig auftretenden Meldungsidentifikation "B" keine Falschaussagen bezüglich der Übergangswahrscheinlichkeit zu anderen Meldungsidentifikationen zu treffen.

Eine derartige Normierung bringt vor allem den Vorteil mit sich, dass häufig auftretende Meldungsidentifikationen nicht übergewichtet werden. Neben der Verwendung des Maximums sind auch andere Werte als Referenz für die durchzuführende Normierung möglich.

Die absolute Auftretenshäufigkeit der Meldungsidentifikation "B" ist in vorliegendem Ausführungsbeispiel 4 (vergleiche das zuvor aufgeführte Histogramm). Das erste Zeilenelement bezieht sich auf die Meldungsidentifikation "A". Die Meldungsidentifikation "A" hat gemäß dem zuvor aufgeführten Histogramm eine absolute Auftretenshäufigkeit von 3. Das für dieses Matrixelement geltende Maximum hat daher einen Wert von 4.

Der Wert 2 des Matrixelements wird durch 4 geteilt, so dass sich ein Wert von 0,5 für das korrespondierende Matrixelement der Übergangswahrscheinlichkeitsmatrix ergibt. Der Vorgang wird für alle Matrixelemente der Spalte "B" entsprechend wiederholt, so dass beide Matrizen die folgende Gestalt aufweisen:

| | A | B | C | D | | A | B | C | D |
|---|---|---|---|---|---|---|---|---|---|
| A | 0 | 2 | 0 | 0 | A | 0 | 0,5 | 0 | 0 |
| B | 0 | 0 | 0 | 0 | B | 0 | 0 | 0 | 0 |
| C | 0 | 2 | 0 | 0 | C | 0 | 0,5 | 0 | 0 |
| D | 0 | 2 | 0 | 0 | D | 0 | 0,4 | 0 | 0 |

Die zuvor erläuterten Schritte werden für die übrigen Meldungsidentifikationen "A", "C" und "D" wiederholt, so dass sich folgenden Matrizen ergeben:

| | A | B | C | D | | A | B | C | D |
|---|---|---|---|---|---|---|---|---|---|
| A | 0 | 2 | 2 | 3 | A | 0 | 0,5 | 0,67 | 0,6 |
| B | 2 | 0 | 2 | 2 | B | 0,5 | 0 | 0,5 | 0,4 |
| C | 2 | 2 | 0 | 2 | C | 0,67 | 0,5 | 0 | 0,4 |
| D | 2 | 2 | 2 | 0 | D | 0,4 | 0,4 | 0,4 | 0 |

Dabei wurden folgende Ketten von Meldungsidentifikationen ausgewertet:
Ausgehend von A: A-B-C-D-A (zweimal);
Ausgehend von B: B-C-D-B, B-A-B und B-C-D-A-B;
Ausgehend von C: C-D-B-A-B-C und C-D-A-B-C;
Ausgehend von D: D-B-A-B-C-D, D-A-B-C-D, D-A-D und D-D.

Für die zu berücksichtigen Übergangswahrscheinlichkeiten zwischen zwei Meldungsidentifikationen wird ein erster Schwellwertparameter derart bestimmt, dass eine relative Anzahl an Paaren von Meldungsidentifikationen, deren Übergangswahrscheinlichkeiten nach dem Ermitteln des ersten Schwellwertparameters oberhalb des zu ermittelnden ersten Schwellwertparameters liegen, in Bezug auf alle in dem Vergleichsarchiv hinterlegten Paare von Meldungsidentifikationen betragsmäßig kleiner als ein Schwellwert von 7,5% ist.

Hierzu werden in einem sequentiellen oder parallelen Berechnungsschritt verschiedene erste Schwellwertparameter für die Übergangswahrscheinlichkeit gewählt und jeweils der relative Anteil der Treffer (identifizierten Paare von Meldungsidentifikationen mit Übergangswahrscheinlichkeiten oberhalb des ersten Schwellwertparameters) an der Gesamtmenge an Meldungsidentifikationspaaren berechnet. Im vorliegenden Fall beträgt die Zahl der Trefferpaare Zwei (Übergang der Meldungsidentifikationen A zu C und C zu A), wobei der Schwellwertparameter 0,6 oder 60% beträgt.

In einem nachfolgenden Schritt werden häufig auftretende Ketten (3er-, 4er, 5er-Ketten usw.) von Meldungsidentifikationen identifiziert, die für eine nachfolgende Analyse bzw. Weiterverarbeitung verwendet werden können.

Anschließend wird eine absolute Auftretenshäufigkeit der einzelnen Ketten ermittelt.

Darauffolgend wird ein zweiter Schwellwertparameter für eine minimale relative Auftretenshäufigkeit einer Kette ermittelt. Die Ermittlung erfolgt dabei derart, dass eine relative Auftretenshäufigkeit von Ketten, die betragsmäßig oberhalb des zweiten Schwellwertparameters liegen, in Bezug auf alle in dem Vergleichsarchiv identifizierten Ketten von Meldungsidentifikationen betragsmäßig kleiner als ein Schwellwert von 20% ist. Für diesen Schwellwert wird die zweimal auftretende Meldungsidentifikationskette A-B-C-D-A als Treffer identifiziert.

Der zweite Schwellwertparameter entspricht in diesem Fall dem zweiten vorherbestimmten Schwellwert, was aber keineswegs der Fall sein muss - wie die zuvor erläuterte Ermittlung des ersten Schwellwertparameters zeigt.

Die beiden vorherbestimmten Schwellwerte betragen also zum einen 7,5% und zum anderen 20%. Eine Übereinstimmung der Schwellwerte für die einzelnen Teilparameter ist demnach keine Voraussetzung bei der Anwendung eines erfindungsgemäßen Verfahrens.

Die ermittelten Schwellwertparameter werden von dem erfindungsgemäßen Verfahren im letzten Schritt bereitgestellt und können im Rahmen des beschriebenen Auswerteverfahrens bei einem (realen) Meldungsarchiv verwendet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, die durch die Ansprüche definiert wird, zu verlassen.

## Patentansprüche

1. Verfahren zur Durchführung eines Auswerteverfahrens durch eine automatisierte Ermittlung eines Schwellwertparameters des Auswerteverfahrens mittels eines Computers, wobei das Auswerteverfahren zur Auswertung eines Meldungsarchivs mit einer Menge an Meldungen, die bei einer Steuerung und/oder Überwachung einer industriellen Anlage, insbesondere Fertigungs- oder Prozessanlage, generiert werden, durchgeführt wird, wobei die Meldungen jeweils eine Meldungsidentifikation aufweisen, und wobei sich wenigstens zwei Meldungsidentifikationen der Meldungen voneinander unterscheiden, wobei eine Meldungsidentifikation eine Zuweisung zu einer bestimmten Maschine, einem Sensor oder einem Aktor, darstellt, das Ermittlungsverfahren umfassend:
a) Erzeugen eines Vergleichsarchivs und Hinterlegen von Referenzmeldungen in dem Vergleichsarchiv, wobei eine Menge der in dem Vergleichsarchiv hinterlegten Referenzmeldungen im Wesentlichen der Menge an Meldungen entspricht, die in dem Meldungsarchiv hinterlegt sind,
und wobei die Referenzmeldungen jeweils eine Meldungsidentifikation aufweisen, und wobei sich wenigstens zwei Meldungsidentifikationen der Referenzmeldungen voneinander unterscheiden,
und wobei das Vergleichsarchiv mit dem Meldungsarchiv der industriellen Anlage vergleichbare statistische Eigenschaften aufweist, insbesondere eine betragsmäßig gleiche zeitliche Ausdehnung und/oder einen gleichen Wertebereich der Meldungsidentifikationen und/oder eine gleiche Anzahl an verschiedenen Meldungsidentifikationen und/oder gleiche Meldungsidentifikationen und/oder eine gleiche Varianz von Meldungsidentifikationen;
b) Bestimmen einer absoluten Auftretenshäufigkeit von einzelnen Meldungsidentifikationen innerhalb der Menge von in dem Vergleichsarchiv hinterlegten Referenzmeldungen;
c) Bestimmen einer Übergangswahrscheinlichkeit von Referenzmeldungen mit einer ersten Meldungsidentifikation zu Referenzmeldungen mit einer zweiten Meldungsidentifikation bei allen in dem Vergleichsarchiv hinterlegten Referenzmeldungen mittels der jeweiligen absoluten Auftretenshäufigkeit;
d) Ermitteln eines ersten Schwellwertparameters für eine minimale Übergangswahrscheinlichkeit zwischen einer Referenzmeldung mit einer ersten Meldungsidentifikation zu einer Referenzmeldung mit einer zweiten Meldungsidentifikation, derart, dass eine relative Anzahl an Paaren von Referenzmeldungen, deren Übergangswahrscheinlichkeit nach dem Ermitteln des ersten Schwellwertparameters oberhalb des ermittelten ersten Schwellwertparameters liegt, in Bezug auf alle in dem Vergleichsarchiv hinterlegten Paare von Referenzmeldungen mit sich voneinander unterscheidendenden Meldungsidentifikationen betragsmäßig kleiner als ein vorherbestimmter Schwellwert ist, vorzugsweise kleiner als 10 Prozent, bevorzugt kleiner als 5 Prozent, besonders bevorzugt kleiner als 1 Prozent;
e) Bereitstellen des ermittelten Schwellwertparameters und Durchführung des Auswerteverfahrens zur Auswertung des Meldungsarchivs.

2. Verfahren nach Anspruch 1, bei dem zwischen den Verfahrensschritten d und e folgende Schritte durchgeführt werden:
i) Identifizieren einer ersten Meldung, die eine erste Meldungsidentifikation aufweist, und einer zweiten, zeitlich nachfolgenden Meldung, die eine zweite Meldungsidentifikation aufweist, wobei die dazugehörige Übergangswahrscheinlichkeit von der ersten Meldungsidentifikation zu der zweiten Meldungsidentifikation betragsmäßig größer als der erste Schwellwertparameter für die minimale Übergangswahrscheinlichkeit zwischen zwei Meldungsidentifikationen sein muss, und wobei die zweite Meldungsidentifikation innerhalb einer festzulegenden Zeitspanne, ausgehend von der ersten Meldungsidentifikation, in dem Vergleichsarchiv auffindbar sein muss;
ii) Zusammenfassen der beiden identifizierten Meldungen als eine 2er-Kette;
iii) Wiederholen der Schritte i und ii bei jeder in dem Vergleichsarchiv hinterlegten Meldung;
iv) Ausgehend von einer zweiten Meldung einer 2er-Kette, die eine zweite Meldung mit einer zweiten Meldungsidentifikation aufweist, Durchsuchen der Menge an Meldungen innerhalb der festgelegten Zeitspanne nach weiteren, zeitlich nachfolgenden Meldungen, bis ein Ende der Zeitspanne erreicht ist;
v) Berücksichtigen der jeweiligen weiteren Meldung, wenn die Übergangswahrscheinlichkeit der zeitlich davor liegenden Meldungsidentifikation hin zu der weiteren Meldungsidentifikation betragsmäßig größer als der erste Schwellwertparameter für die minimale Übergangswahrscheinlichkeit zwischen zwei Meldungsidentifikationen ist;
vi) Zusammenfassen der gefundenen weiteren Meldungen zusammen mit der ersten und zweiten Meldung als eine weitere Kette, insbesondere 3er-Kette, 4er-Kette oder 5er-Kette;
vii) Wiederholen der Schritte v und vi bei jeder zuvor identifizierten 2er-Kette;
viii) Ermitteln einer absoluten Auftretenshäufigkeit einzelner Ketten;
ix) Ermitteln eines zweiten Schwellwertparameters für eine minimale relative Auftretenshäufigkeit einer Kette, derart, dass eine relative Auftretenshäufigkeit von Ketten, die betragsmäßig oberhalb des zweiten Schwellwertparameters liegen, in Bezug auf alle in dem Vergleichsarchiv identifizierten Ketten von Meldungsidentifikationen betragsmäßig kleiner als ein vorherbestimmter Schwellwert ist, bevorzugt kleiner als 10 Prozent, vorzugsweise kleiner als 5 Prozent, höchst vorzugsweise kleiner als 1 Prozent.

3. Computerprogramm mit durch einen Computer ausführbaren Programmcodeanweisungen zur Implementierung des Verfahrens nach einem der Ansprüche 1 bis 2.

4. Speichermedium mit einem durch einen Computer ausführbaren Computerprogramm nach Anspruch 3.

5. Computersystem, auf dem ein Computerprogramm nach Anspruch 3 implementiert ist.

## Claims

1. Method for carrying out an evaluation method by way of an automated determination of a threshold parameter of the evaluation method by means of a computer, wherein the evaluation method is carried out for evaluating a message archive with a set of messages which are generated during a control and/or monitoring of an industrial plant, in particular a manufacturing or processing plant, wherein the messages each have a message identification, and wherein at least two message identifications of the messages differ from one another, wherein a message identification comprises an allocation to a particular machine, a sensor or an actuator, the determination method comprising:
a) creating a comparison archive and storing reference messages in the comparison archive, a set of the reference messages stored in the comparison archive substantially corresponding to the set of messages which are stored in the message archive,
and wherein the reference messages each have a message identification, and wherein at least two message identifications of the reference messages differ from one another,
and wherein the comparison archive has statistical properties comparable with the message archive of the industrial plant, in particular a quantitatively identical temporal extent and/or an identical value range of the message identifications and/or an identical number of different message identifications and/or identical message identifications and/or an identical variance of message identifications;
b) determining an absolute occurrence frequency of individual message identifications within the set of reference messages stored in the comparison archive;
c) determining a transition probability of reference messages with a first message identification to reference messages with a second message identification in all reference messages stored in the comparison archive by means of the respective absolute occurrence frequency;
d) determining a first threshold parameter for a minimum transition probability between a reference message with a first message identification and a reference message with a second message identification such that a relative number of pairs of reference messages, the transition probability of which after the determination of the first threshold parameter lies above the first threshold parameter to be determined, in relation to all the pairs of reference messages stored in the comparison archive with message identifications that differ from one another is quantitatively smaller than a previously determined threshold value, preferably smaller than 10%, preferably smaller than 5%, particularly preferably smaller than 1%;
e) providing the determined threshold parameter and carrying out the evaluation method for evaluating the message archive.

2. Method according to claim 1, wherein between the method steps d and e, the following steps are carried out:
i) identifying a first message which has a first message identification and a second temporally subsequent message which has a second message identification, wherein the associated transition probability from the first message identification to the second message identification must be quantitatively greater than the first threshold parameter for the minimum transition probability between two message identifications and wherein the second message identification must be findable in the comparison archive within a time span to be fixed, starting from the first message identification;
ii) combining the two identified messages as a 2-part chain;
iii) repeating the steps i) and ii) for each message stored in the comparison archive;
iv) starting from a second message of a 2-part chain which has a second message with a second message identification, searching through the set of messages within the stipulated time span for further, temporally subsequent messages until an end of the time span is reached;
v) taking account of the respective further message if the transition probability of the temporally previous message identification toward the further message identification is quantitatively greater than the first threshold parameter for the minimum transition probability between two message identifications;
vi) combining the further messages found together with the first and second message as a further chain, in particular a 3-part chain, a 4-part chain or a 5-part chain;
vii) repeating the steps v) and vi) of each previously identified 2-part chain;
viii) determining an absolute occurrence frequency of individual chains;
ix) determining a second threshold parameter for a minimum relative occurrence frequency of a chain such that a relative occurrence frequency of chains that lie quantitatively above the second threshold parameter, in relation to all the chains of message identifications identified in the comparison archive is quantitatively smaller than a previously determined threshold value, preferably smaller than 10%, preferably smaller than 5%, maximally preferably smaller than 1%.

3. Computer program with program code instructions that are executable by a computer for implementing the method according to one of the claims 1 to 2.

4. Storage medium with a computer program executable by a computer, according to claim 3.

5. Computer system on which a computer program according to claim 3 is implemented.

## Revendications

1. Procédé pour effectuer un procédé d'évaluation par une recherche automatisée d'un paramètre de valeur de seuil du procédé d'évaluation au moyen d'un ordinateur, dans lequel on effectue le procédé d'évaluation pour l'évaluation d'une archive de messages ayant un ensemble de messages, qui sont créés lors d'une commande et/ou d'un contrôle d'une installation industrielle, en particulier d'une installation de fabrication ou de processus, dans lequel les messages ont chacun une identification de message et dans lequel, au moins deux identifications des messages se distinguent l'une de l'autre, dans lequel une identification de message représente une affectation à une machine, un capteur ou un actionneur déterminé, le procédé de détermination comprenant :
a) on produit une archive de comparaison et on met des messages de référence dans l'archive de comparaison, dans lequel un ensemble des messages de référence mis dans l'archive de comparaison correspond pour l'essentiel à l'ensemble des messages, qui sont mis dans l'archive de messages,
et dans lequel les messages de référence ont chacun une identification de message et dans lequel au moins deux identifications de message des messages de référence se distinguent l'une de l'autre,
et dans lequel l'archive de comparaison a des propriétés statistiques comparables à l'archive de messages de l'installation industrielle, en particulier une même étendue dans le temps en valeur absolue et/ou une même plage de valeurs des identifications de message et/ou un même nombre d'identifications différentes de message et/ou de mêmes identifications de message et/ou une même variance d'identifications de message ;
b) on détermine une fréquence absolue d'apparition de divers identifications de message dans l'ensemble de messages de référence mis dans l'archive de comparaison ;
c) on détermine une probabilité de changement de messages de référence ayant une première identification de message en des messages de référence ayant une deuxième identification de message pour tous les messages de référence mis dans l'archive de comparaison, au moyen de la fréquence d'apparition absolue respective ;
d) on recherche un premier paramètre de valeur de seuil pour une probabilité de changement minimum entre un message de référence ayant une première identification de message en un message de référence ayant une deuxième identification de message, de manière à ce qu'un nombre relatif de paires de message de référence, dont la probabilité de message est, suivant la recherche du premier paramètre de valeur de seuil, au-dessus du premier paramètre de valeur de seuil recherché, plus petite en valeur absolue, par rapport à toutes les paires, mises dans l'archive de comparaison, de messages de référence ayant des identifications de message se distinguant l'une de l'autre, qu'une valeur de seuil déterminée précédemment, de préférence plus petite que 10 pour cent, de préférence plus petite que 5 pour cent, d'une manière particulièrement préférée plus petite que 1 pour cent ;
e) on met à disposition le paramètre de valeur de seuil déterminé et on effectue le procédé d'évaluation pour l'évaluation de l'archive de messages.

2. Procédé suivant la revendication 1, dans lequel entre les stades d et e de procédé, on effectue les stades suivants :
i) identification d'un premier message, qui a une première identification de message et d'un deuxième message suivant dans le temps, qui a une deuxième identification de message, dans lequel la probabilité de changement de la première identification de message à la deuxième identification de message doit être plus grande en valeur absolue que le premier paramètre de valeur de seuil pour la probabilité de changement minimum entre deux identifications de message et dans lequel la deuxième identification de message doit, dans un laps de temps fixé, pouvoir être trouvée dans l'archive de comparaison à partir de la première identification de message ;
ii) réunion des deux messages identifiés sous la forme d'un enchaînement à 2 ;
iii) répétition des stades i et ii pour chaque message mis dans l'archive de comparaison ;
iv) à partir d'un deuxième message d'un enchaînement à 2, qui a un deuxième message ayant une deuxième identification de message, recherche dans l'ensemble de messages dans le laps de temps fixé d'autres messages suivants dans le temps, jusqu'à ce qu'une fin de laps de temps est atteinte ;
v) prise en compte de l'autre message respectif, si la probabilité de changement de l'identification de message précédente dans le temps en l'autre identification de message est plus grande en valeur absolue que le premier paramètre de valeur de seuil pour la probabilité de changement minimum entre deux identifications de message ;
vi) réunion des autres messages trouvés ensemble avec le premier et le deuxième messages sous la forme d'un autre enchaînement, notamment d'un enchaînement à 3, d'un enchaînement à 4 ou d'un enchaînement à 5 ;
vii) répétition des stades v et vi pour chaque enchaînement à 2 identifié précédemment ;
viii) recherche d'une fréquence d'apparition absolue des divers enchaînements ;
ix) recherche d'un deuxième paramètre de valeur de seuil pour une fréquence d'apparition relative minimum d'un enchaînement, de manière à ce qu'une fréquence d'apparition relative d'enchaînements, qui en valeur absolue sont au-dessus du deuxième paramètre de valeur de seuil, soit, par rapport à tous les enchaînements, identifiés dans l'archive de comparaison, d'identification de message plus petite en valeur absolue qu'une valeur de seuil déterminée auparavant, de préférence plus petite que 10 pour cent, de préférence plus petite que 5 pour cent, de manière très préférée plus petite que 1 pour cent.

3. Programme d'ordinateur, comprenant des instructions de code de programme pouvant être exécuté par ordinateur pour la mise en oeuvre du procédé suivant l'une des revendications 1 à 2.

4. Support de mémoire, comprenant un programme d'ordinateur pouvant être réalisé par ordinateur suivant la revendication 3.

5. Système d'ordinateur, sur lequel est mis en oeuvre un programme d'ordinateur suivant la revendication 3.
